# EUROPEAN PATENT SPECIFICATION

(11) **EP 0 764 902 B1**
(45) Date of publication and mention of the grant of the patent: **05.12.2001**
(21) Application number: 96306525.5
(22) Date of filing: 09.09.1996
(51) Int. Cl.: G06F 9/46, H04L 12/18, H04L 29/06

(54) **Method for collaboration between applications via partitioning of state variables and storage device storing a program performing said method when executed.**
Verfahren zur Zusammenarbeit zwischen Anwendungsprogrammen durch Einteilung von Zustandsvariabeln und Speichermittel zum Speichern eines Programms zur Durchführung dieses Verfahrens wenn ausgeführt.
Procédé de collaboration entre programmes d'application par partition de variables d'état et moyen de stockage d'un programme réalisant cette méthode lorsqu'il est exécuté.

(30) Priority: 22.09.1995 US 532203
(43) Date of publication of application: 26.03.1997
(73) Proprietor: INTERNATIONAL BUSINESS MACHINES CORPORATION, Armonk, NY 10504 (US)
(72) Inventor: Borrel, Paul, Peekskill, New York 10566 (US); Kirchner, Peter Daniel, Putnam Valley, New York 10579 (US); Menon, Jai Prakash, Peekskill, New York 10566 (US)
(74) Representative: Burt, Roger James, Dr.

(56) References cited:
- EP-A- 0 601 428
- MICROPROCESSING AND MICROPROGRAMMING, vol. 35, no. 1/5, September 1992, AMSTERDAM, NL, pages 641-649, XP000325178 T. KAPUS ET AL: "Verifying networks of processes that communicate via shared variables"
- APL91 - THE INTERNATIONAL CONFERENCE ON APL - CONFERENCE PROCEEDINGS, 4 - 8 August 1991, PALO ALTO, CA, US, pages 369-385, XP000315060 L. E. ZEIDNER: "The Server Network Generator (SNG) A CASE Tool for Distributed Cooperative Processing"
- COMPUTER COMMUNICATIONS, vol. 17, no. 1, January 1994, JORDAN HILL, OXFORD, GB, pages 7-16, XP000415042 G. CHUNG ET AL: "Dynamic participation in a computer-based conferencing system"
- COMPUTER COMMUNICATIONS, vol. 16, no. 9, September 1993, JORDAN HILL, OXFORD, GB, pages 594-602, XP000382972 T. KIRSCHE ET AL: "Communication support for cooperative work"

## Description

### Background of the Invention

### 1. Technical Field

The invention relates generally to computer systems, and, more particularly, to collaboration via computer systems.

### 2. Description of the Related Art

Computer systems typically provide for collaboration by two or more users by sharing information and control of a single application among the users.

For example, European Patent Publication No. 0 622 930 A2 discloses a computer system in which a plurality of remote computer systems are linked to a host computer system running an application program. The remote computer systems can operate the application program of the host. A window in each computer system is controlled to display the same image, thus providing for collaboration among users of the remote computer systems.

In another example, PCT Publication No. WO 95/08793 discloses a virtual reality system that includes a communication unit linked to a plurality of remote computer systems. The communication unit generates data corresponding to the virtual world as seen from the position, orientation, and/or movement of a user at each remote computer system, and periodically communicates such data to the corresponding remote computer system for display to the user.

Microprocessing and Microprogramming, vol.35, no. 1/5, September 1992, Amsterdam, NL, pages 641-649, XP000325178 T. Kapus et al: "Verifying networks of processes that communicate via shared variables", and APL91 - The International Conference on APL - Conference Proceedings, 4-8 August 1991, Palo Alto, CA, US, pages 369-385, XP000315060 L.E. Zeidner: "The Server Network Generator (SNG) A Case Tool for Distributed Cooperative Processing", disclose a collaboration between two applications, each application having state variables grouped into partitions and the sending of updates between such applications when changes to state variables are made.

In the conventional collaboration systems as described above, a large bandwidth is required to effectively transfer the information and control between the remote computer systems and the single application. Systems that provide such a large bandwidth are typically very costly.

Moreover, this problem is paramount when providing collaboration among users of a graphics application because such a system requires communicating large amounts of graphics data between the graphics application and the remote computer systems. Thus, collaboration among users of a graphics application utilizing the conventional means requires a very large bandwidth, and thus requires costly systems.

### Summary of the Invention

The above-stated problems and related problems of the prior art are solved with the principles of the present invention, a method and program storage device for collaboration via partitioning of state variables, as claimed in claims 1 and 7.

Advantageously, the method and program storage device of the present invention provides for flexibility in controlling the level of the collaboration between the applications, and may be used to provide for collaboration over low-bandwidth communication links.

### Brief Description of the Drawings

FIG. 1 is a functional block diagram of the architecture of the conventional graphics system;
FIG. 2 is a pictorial representation of a network of computer systems;
FIG. 3 is a pictorial representation of the layers of software executed by the computer systems of FIG. 2;
FIG. 4 is a table illustrating the partitioning of state variables of the application layer of FIG. 3 according to the present invention;
FIG. 5 is a table illustrating the classifications associated with the partitions of collaborating applications according to the present invention;
FIG. 6 illustrates an entry of the table of FIG. 5 wherein the partitions of the sending application correspond to the partitions of the receiving application according to the present invention;
FIG. 7 is a flow chart illustrating the operation of a collaborating graphics application in send mode according to the present invention; and
FIG. 8 is a representation of a user-interface that provides the user with the ability to initialize the classifications of the table of FIG. 5.

### Detailed Description of the Preferred Embodiments

The present invention as described below provides for collaboration among users of computer graphics applications. However, the invention is not limited in this respect and may be utilized to provide for collaboration among users of any application software.

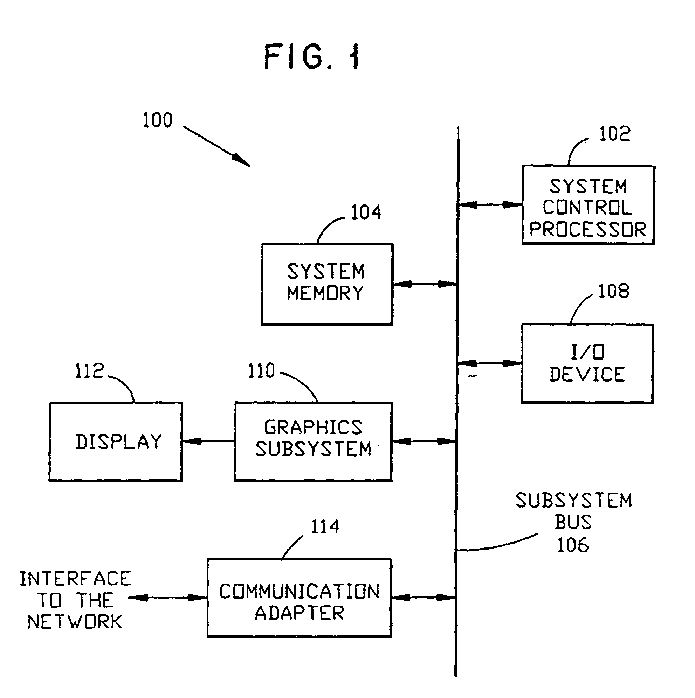

The architecture of the conventional graphics system is depicted in FIG. 1. As shown, a graphics system 100 includes a system control processor 102 which is coupled to a system memory 104 via a subsystem bus 106. The system memory 104 consists of random access memory that stores graphics data defining the objects contained in one or more three dimensional models. The graphics data that defines each object consists of coordinates and attributes (e.g. color) of primitives. The primitives are geometric entities such as a solid, line or surface. Typically, the primitives are triangles defined by a set of three vertices. In this case, the system memory 104 includes an ordered list of the vertices of triangles that define the surfaces of objects that make up a three dimensional scene. In addition, the system memory 104 may store a list of primitive identifiers that correspond to each of the primitives and transformation matrices that specify how and where the primitives are to be displayed.

The graphics system 100 also includes a graphics subsystem 110 that interfaces to the system memory 104 via the subsystem bus 106. The graphics subsystem 110 operates to render the graphics data stored in the system memory 104 for display as an array of pixels on a portion of a display area of a display device 112. The display device 112 may utilize raster scan techniques or liquid crystal display techniques to display the pixels.

The graphics subsystem 110 may be implemented in hardware as, for example, a gate array or a chip set that includes at least one programmable sequencer, memory, integer processing unit(s) and floating point unit(s), if needed. In the alternative, the graphics subsystem 110 may be implemented in software together with a processor, which may be a conventional general purpose processor, a part of the system control processor 102, or part of a co-processor integrated with the system control processor 102.

Input/output (I/O) devices 108 interface to the system control processor 102 via the system bus 106. The I/O devices 108 may include a keyboard, template or touch pad for text entry, a pointing device such as a mouse, trackball, Spaceball or light pen for user input, and speech recognition for speech input.

The system memory 104 also stores a graphics application that is executed by the system control processor 102. Generally, the graphics application allows the user via user input commands received from the I/O devices 108 to navigate through the three- dimensional models represented by the data stored therein, perform animations with respect to the three-dimensional models, or other similar operations. The three dimensional scenes are rendered by the graphics subsystem 110 for display as an array of pixels on a portion of a display area of a display device 112.

The graphics application includes state variables each of whose value changes over time. The state of the graphics application, at any point in time, is defined by the current value of such state variables. For a graphics application, the state variables typically include, for example, the following:
1) position (x,y,z), orientation (yaw angle, pitch angle, roll angle), and field of view (FOVx, FOVy) of the camera in a world coordinate system;
2) list of selected instances and associated transformation matrices, wherein each instance is typically an integer that identifies an object (which is further represented by a set of triangles), and wherein the associated transformation matrices represent the position and orientation of the objects of the instance in the world coordinate system; and
5) shadow settings, for example, the position (x,y,z) and orientation (yaw angle, pitch angle, roll angle) of one or more light sources in the world coordinate system, or the position of the shadow floor, which may be represented by the variables (a,b,c,d) that define a plane in the world coordinate system.

In addition, data and information may be shared among two or more graphics systems by connecting the graphics systems via a communication link. The communication link may be a local area network (LAN), which provide direct communication among the computer systems on the user's local premises, or a wide area network (WAN), which provide communication services to a geographic area larger than that served by a LAN. Typically, WANs operate at a slower speed than LANs. Moreover, at the physical level, distributed data processing systems can run over various network interfaces, such as Token Ring, Ethernet, PC Network, Fiber Distribution Data Interface (FDDI), X.25, and Integrated Services Digital Network (ISDN).

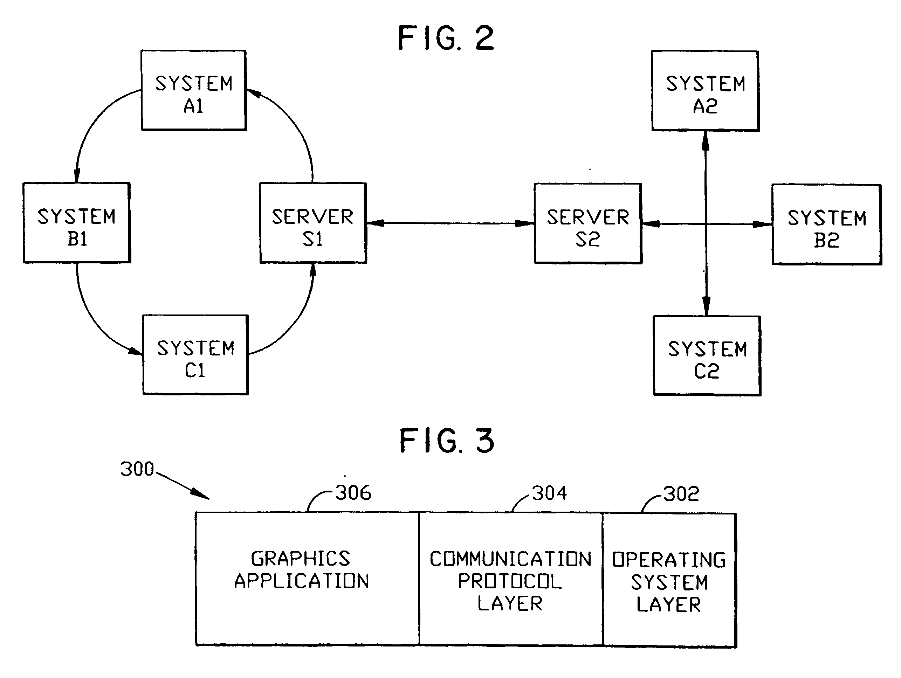

An example of a networked system is shown in FIG. 2, wherein three computer systems A1, B1, and C1 are networked to a server system S1 in a token-ring configuration. The physical communication links between the computer systems A1,B1,C1 and between the computer systems A1,C1 and the server S1 may be a T1 link, a telephone line, a fiber optic link or other suitable means. In addition, the system includes three computer systems A2,B2,C2 that are networked to a server system S2 in a star configuration. The physical communication links between the computer systems A2,B2,C2 and the server S2 may be a T1 link, a telephone line, a fiber optic link or other suitable means. In addition, the server S1 communicates with the server S2 over a communication link. The communication link may be a T1 link, a telephone line, a fiber-optic link, a microwave link, an Internet connection, or other suitable means for communicating data between the servers S1 and S2. The servers S1 and S2 are typically more robust in terms of processing power, data storage capacity, and memory than the associated computer systems, and may be used to share application software and data among the computer systems. Moreover, the servers S1 and S2 typically provide security to control access to the associated computer systems.

To communicate data between systems, as is conventional, the systems of FIG. 2 each include a communication adapter 114 as shown in FIG. 1. The communication adapter 114 provides a physical interface to the network and may implement various network interfaces such as Token Ring, Ethernet, PC Network, Fiber Distribution Data Interface (FDDI), X.25, and Integrated Services Digital Network (ISDN), or other similar interfaces.

As shown in FIG. 3, the software 300 that controls each of the graphics systems of FIG. 1 to communicate with one another preferably includes an operating system layer 302, a communication protocol layer 304, and an application layer 306. Each of the layers 302,304,306 can be stored on floppy disks or CD-ROMs and transferred to a fixed disk drive via a floppy disk drive (not shown) or CD-ROM drive (not shown), respectively. Moreover, two or more of the layers 302,304,306 may be integrated into a common software package that is stored on one or more floppy disks or CD-ROMS. In this case, the software package is transferred to the disk drive via the floppy disk drive or CD-ROM drive, respectively. The software 300 is preferably read from the fixed disk drive (in the alternative, from the CD-ROM drive or from the floppy disk drive) into the system memory 104 for execution by the system control processor 102.

The operating system layer 302, when executed by the system control processor 102, provides a direct interface to the hardware devices of the graphics system, and more specifically to the communication adapter 114, thus managing the flow of data between the graphics system and other graphics systems and providing for user interaction. The application layer 306 includes the graphics application as described above and, when executed by the system control processor 102, may send and receive data from other applications (which may be executing on a remote graphics system). The communication protocol layer 304 formats the data to be sent from one application to another application and routes the data over the communication link guaranteeing that the data is properly delivered to the appropriate application.

To illustrate the functions performed by the various layers of the software 300 in a distributed environment, consider the operation of two remote graphics systems A and B when data generated by the application layer 306 executing on graphics system A (i.e. the sender) is sent to the application layer 306 that is executing on a computer system B (i.e. the receiver). First, the communication protocol layer 304 executing on the sender determines the location of the receiver, then marshals the data into a transmission format that complies with a communication protocol, and delivers the formatted data to the communication adapter 114 of the sender. The communication adapter 114 of the sender then transfers the formatted data to the communication adapter 114 of the receiver over the communication link. This transfer may be direct, or indirect via intermediate nodes within the communication link.

Upon receipt, the communication adapter 114 of the receiver delivers the received data to the communication protocol layer 304 of the receiver. The communication protocol layer 304 executing on the receiver reformats the received data by stripping away, for instance, any routing information and delivers the reformatted data to the application layer 306 of the receiver.

The application layer 306 executing at the receiver then processes the data accordingly. Typically, the application layer 306 of the receiver acknowledges receipt of the data. This mechanism can also be used to implement a peer-to-peer environment by making each application operate independently as both a sender and a receiver. Some of the common communication protocols used to transfer data between sender and receiver include Open Systems Interconnect (OSI), Transmission Control Protocol/Internet Protocol (TCP/IP) and System Network Protocol (SNA). A more detailed description of TCP/IP may be found in D. Comer, "Internetworking with TCP/IP: principles, protocols, and architecture", Prentice-Hall, 1988. A more detailed description of OSI may be found in Marshall T. Rose, "The Open Book: A Practical Perspective on OSI", Prentice-Hall, 1990. And a more detailed description of SNA may be found in James Martin, "SNA: IBM's Networking Solution", Prentice-Hall, 1987.

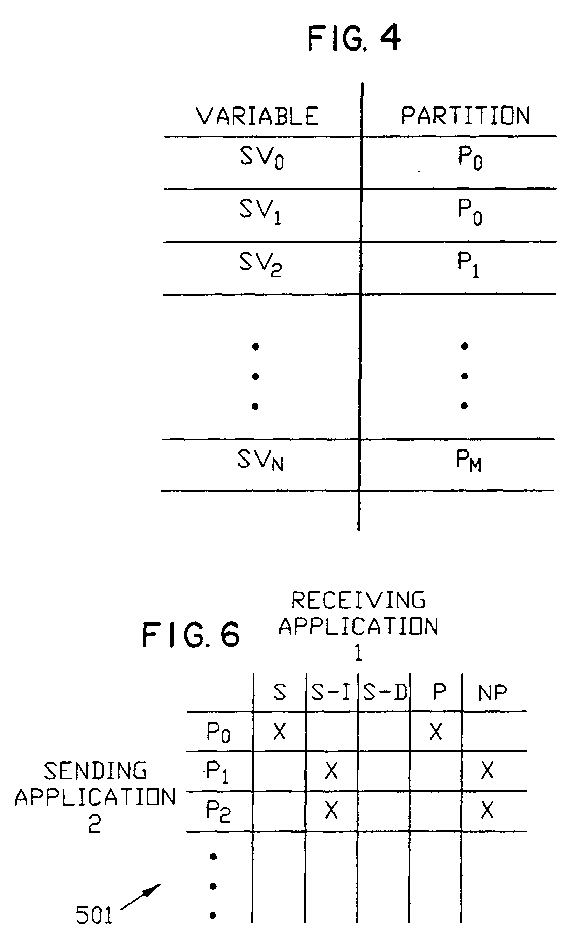

According to the present invention, collaboration among two or more graphics applications is provided by decomposing the state variables associated with each graphics application into partitions. For example, the state variables SV0, SV1, SV2 .. SVN associated with a particular graphics application may be assigned to partitions P0, P1 .. PM as shown in the table of FIG. 4. Such a table may be stored in the system memory 104 of the graphics system 100 that is executing the particular graphics application, or may be stored on a remote computer system that is networked to the graphics system 100 executing the particular graphics application.

In addition, a meta-state table is provided that stores a classification associated with the partitions of the graphics applications. Each classification indicates, for a given partition, which graphics applications are to be sent data that reflects changes to the state variables of the given partition. The meta-state table may be stored in the system memory 104 of one of the collaborating graphics systems, or may be stored on a remote machine that is connected to the collaborating graphics systems via a communication link.

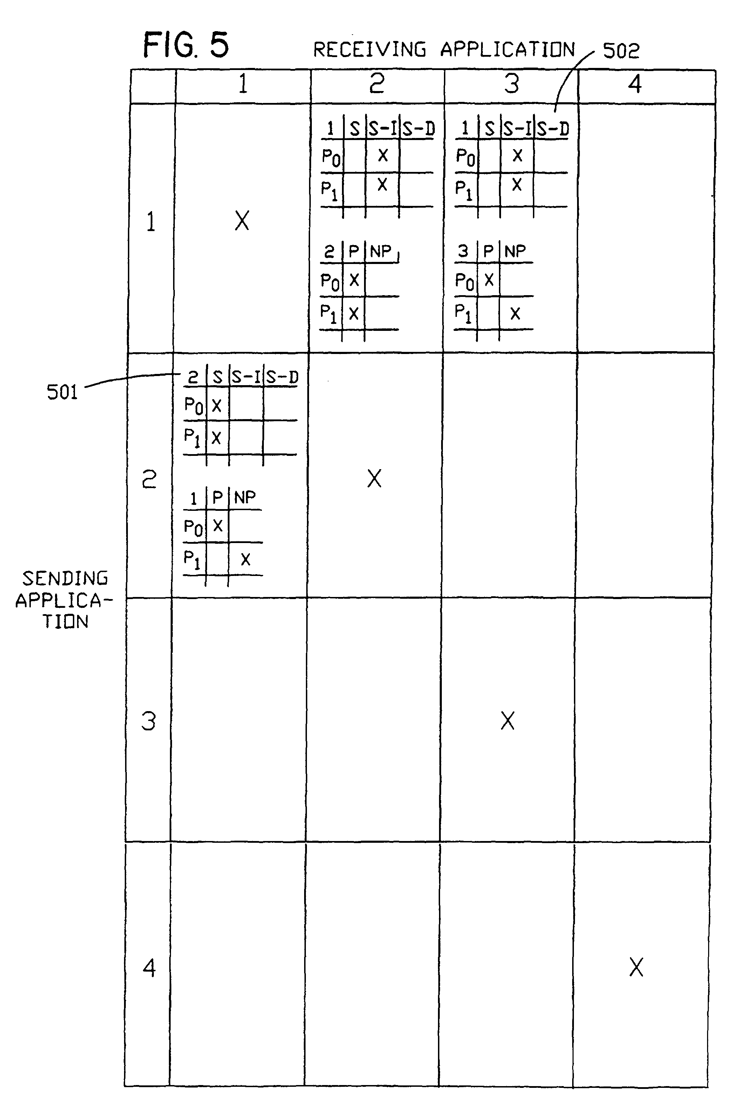

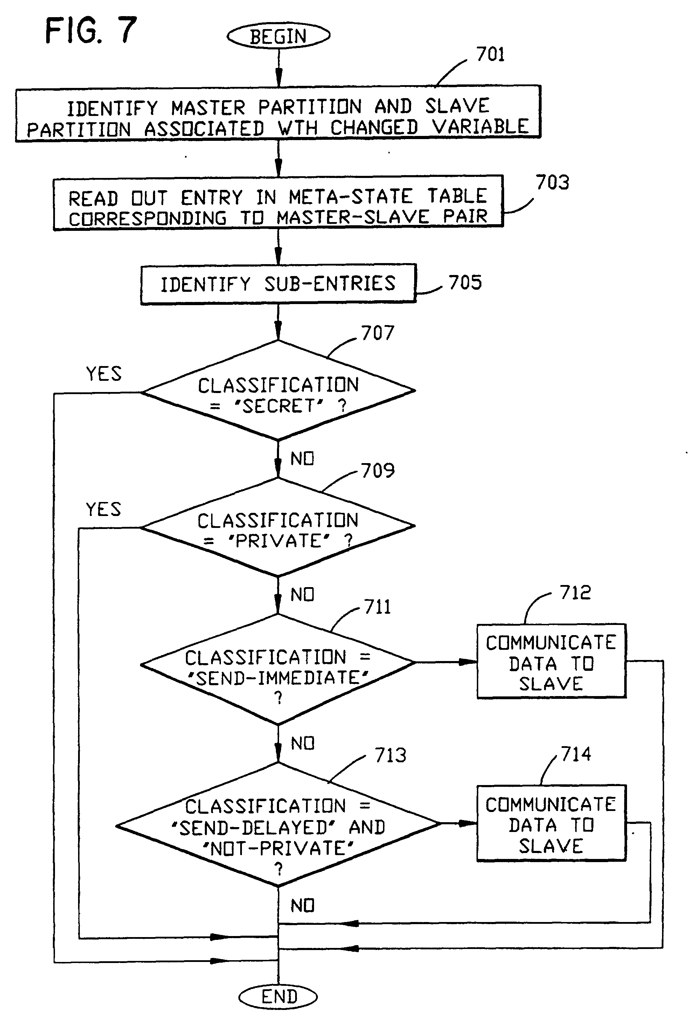

Preferably, as shown in FIG. 5, the meta-state table is organized as a plurality of entries wherein each entry corresponds to a particular sender-receiver application pair. For example, one entry 501 corresponds to the case wherein the graphics application executing on computer system B (e.g., graphics application 2) is the sender and the graphics application executing on computer system A (e.g., graphics application 1) is the receiver, and another entry 502 corresponds to the case wherein the graphics application executing on computer system A (e.g., graphics application 1) is the sender and the graphics application executing on computer system C (e.g., graphics application 3) is the receiver. Each entry includes a plurality of sub-entries each corresponding to a partition in the sender and receiver. Each sub-entry corresponding to a given partition in the sender (hereinafter "sender sub-entry") includes a classification that indicates if the sender has requested that the receiver be sent data that reflects changes to the state variable(s) of the given partition of the sender. Similarly, each sub-entry corresponding to a given partition in the receiver (hereinafter "receiver sub- entry") includes a classification that indicates if the receiver has requested that the sender send to the receiver data that reflects changes to the state variable(s) of the given partition of the receiver. If the partitions are shared among the sender and receiver, the corresponding sender and receiver sub-entries for a given partition may be integrated into a single entry, for example as shown in FIG. 6.

Moreover, the classification of each sender sub-entry preferably is one of three predetermined encodings as shown in FIG. 5. The first predetermined encoding "S" (or "secret"), which may be identified by the first bit of the classification being set, represents that the sender has requested that the receiver not be sent data that reflects the change to the state variable(s) of the given partition of the sender. The second predetermined encoding "S-I" (or "Send-Immediate"), which may identified by the second bit of the classification being set, represents that the sender has requested that the receiver be sent immediately data that reflects the change to the state variable(s) of the given partition of the sender. And the third predetermined encoding "S-D" (or "Send-Delayed"), which may identified by the third bit of the classification being set, represents that the sender has requested that the receiver be sent at some predetermined time in the future data that reflects the change to the state variable(s) of the given partition of the sender. For example, the predetermined time in the future may be derived from additional data associated with the sub-entry that represents the priority of sending data that reflects the change to the state variable(s) of the given partition with respect to sending data that reflects the change to the state variable(s) of the another partition that shares the send-delayed classification. The encodings described above are exemplary. The present invention may be implemented with alternate encodings that represent the respective classifications and priorities. A more detailed description of the operation of the sender application in response to such sub-entry encodings is set forth below with respect to FIG. 7.

In addition, the classification of each receiver sub-entry preferably is one of two predetermined encodings as shown in FIG. 5. The first predetermined encoding "P" (or "private"), which is identified by the first bit of the classification being set, represents that the receiver has requested that the sender not send to the receiver data that reflects the change to the state variable(s) of the given partition of the receiver. The second predetermined encoding "NP" (or "not private"), which is identified by the second bit of the classification being set, represents that the receiver has requested that the sender send to the receiver data that reflects the change to the state variable(s) of the given partition of the receiver.

To provide for collaboration among two or more graphics application, each graphics application periodically checks the status of its state variables to detect if a change has occurred. This may be accomplished by comparing each state variable with an old copy of the state variable, and upon detecting a change updating the old copy. This may also be accomplished by setting a flag when one or more set operations are performed on a state variable, and periodically checking the flag. Upon detecting a change to one of its state variables, the particular graphics application identifies itself as a sender. In the alternative, when a set operation is performed on one or more state variables, the particular graphics application may identify itself as a sender.

As a sender, the particular graphics application executes a collaboration routine that communicates data that reflects the change to the updated state variable to the collaborating graphics application(s), each of which is identified as a receiver, according to the classifications stored in the meta- state table of FIG. 5. The sending graphics application may identify the receiving graphics applications by accessing a list of the receiving graphics applications that includes, for each receiving graphics application, an identifier and the location of the receiving graphics application. The list may be stored in the system memory 104 of one of the sending graphics system, or may be stored on a remote machine that is connected to the sending graphics systems via a communication link.

More specifically, in order to communicate the data that reflects the change to an updated state variable, the sending graphics application preferably performs the collaboration routine described below with respect to FIG. 7 for each receiving graphics application. In step 701, the sending graphics application identifies the partition of the sender associated with the changed state variable and the partition of the receiver associated with the changed state variable. This may be accomplished in many different ways depending upon the system. For example, in a first scenario wherein the sending and receiving graphics application share common state variables, the sending graphics application may identify the partition of the sender associated with the changed state variable and the partition of the receiver associated with the changed state variable by accessing the table of FIG. 4 associated with the sender and receiver, respectively. However, in a second scenario wherein the sending and receiving graphics applications do not share common state variables, a mapping between the state variables of the sender and the receiver may be provided. In this second scenario, the sending graphics application determines the state variable of the receiving graphics application mapped to the changed state variable of the sending graphics application and accesses the table of FIG. 4 associated with the receiver to identify the partition of the receiver associated with the mapped state variable. In the alternative, in either scenario a mapping between partitions may be provided. In this case, the sending graphics application may access the table of FIG. 4 associated with the sender to identify the partition of the sender associated with the changed state variable, and then determine the partition of the receiver mapped to the identified partition of the sender associated with the change state variable of the sending graphics application.

In step 703, the sender accesses the meta-state table reading out the entry corresponding to the particular sender- receiver pair. In step 705, the sender graphics application identifies the particular sub-entries of the entry read out in step 703 that correspond to the partition of the sender associated with the changed state variable and the partition of the receiver associated with the changed state variable which were identified in step 701. In steps 707 to 713, the sender graphics application analyzes the classifications encoded by the particular sub-entries identified in step 705 and acts accordingly.

In step 707, the sender graphics application determines if the classification corresponding to the partition of the sender is "secret", and if so, then the sender graphics application does not communicate the data that reflects the change to the updated state variable to the collaborating receiving graphics application. If not, the collaboration routine of the sending graphics application ends for the particular receiving application.

In step 709, the sender graphics application determines if the classification corresponding to the partition of the receiver is "private", and if so, then the sending graphics application does not communicate the data that reflects the change to the updated state variable to the collaborating receiving graphics application. If not, the collaboration routine of the sending graphics application ends for the particular receiving application.

In step 711, the sending graphics application determines if the classification corresponding to the partition of the sender is "send-immediate" and the classification corresponding to the partition of the receiver is "not-private", and if so, in step 712, the sender graphics application writes the data that reflects the change to the updated state variable and an identifier that identifies the receiving graphics application as an entry in a send queue. Each entry in the send queue also includes a priority field that indicates the priority of sending the data stored in the entry with respect to the data stored in other entries. For example, the priority field of those entries with highest priority may be set to 1, while the priority field of entries with lower priority are set to integers (2, 3, 4... K) corresponding to a decreasing level of priority. In step 712, the priority field of the new entry is set to the highest priority, for example, "1". In addition, in step 712 the sender graphics applications preferably replaces an entry previously stored in the send queue (but not yet sent) that corresponds to the given partition of the sender. Replacing such a previously stored entry advantageously limits the size of the send queue and provides for limited bandwidth communication links to be utilized. However, if in step 711 the sending graphics application determines if the classification corresponding to the partition of the sender is not "send-immediate" and the classification corresponding to the partition of the receiver is not "not-private", the collaboration routine of the sending graphics application ends for the particular receiving application.

In step 713, the sending graphics application determines if the classification corresponding to the partition of the sender is "send-delayed" and the classification corresponding to the partition of the receiver is "not-private", and if so, in step 714 the sender graphics application writes the data that reflects the change to the updated state variable, an identifier that identifies the receiving graphics application, and the priority associated with the given partition as an entry in the send queue. In addition, in step 714 the sender graphics applications preferably replaces an entry previously stored in the send queue (but not yet sent) that corresponds to the given partition of the sender. Replacing such a previously stored entry advantageously limits the size of the send queue and provides for limited bandwidth communication links to be utilized. However, if in step 713 the sending graphics application determines if the classification corresponding to the partition of the sender is not "send-delayed" and the classification corresponding to the partition of the receiver is not "not-private", the collaboration routine of the sending graphics application ends for the particular receiving application.

The sending graphics application also includes a send queue management routine that sends the data stored in the entries of the send queue according to the priority field of the entries. when communication bandwidth is available, the send queue management routine first sends the data encoded in the entries having the highest priority, for example "1", to the receiving graphics application identified by the identifier in such entries. If there are no such entries, the send queue management routine sends the data encoded in the entries having the next highest priority, for example "2", to the receiving graphics application identified by the identifier in such entries. If there are no such entries, the send queue management routine sends the data encoded in the entries having the next highest priority, for example "3", to the receiving graphics application identified by the identifier in such entries. This operation continues for each priority level of the entries of the send queue. After the data of an entry is sent, the entry is removed from the send queue.

Upon receiving the data that reflects the change to the updated state variable, the collaborating receiving graphics application preferably updates one or more of its state variables that correspond to the updated state variable according to the received data. The data reflecting change to state variable may represent an incremental change to the state variable or an absolute change to the state variable. The data reflecting the incremental change represents the incremental difference between the new value of the state variable and the old value of the state variable. The data reflecting the absolute change represents the new value of the state variable. A control field associated with the data sent from the sending graphics application to the receiving graphics application may indicate whether the data represents an incremental or absolute change to the state variable.

In addition, the collaborating graphics applications of the present invention may share common state variables. For example, the collaborating graphics application may be copies of the same graphics application. In this case, the data reflecting the change to a state variables may be the incremental or absolute change to the state variable. However, the collaborating graphics applications of the present invention may not share common state variables. In this case, the data reflecting the change to a state variable may require transformation according to the differences between the semantics of the state variables and possibly other factors.

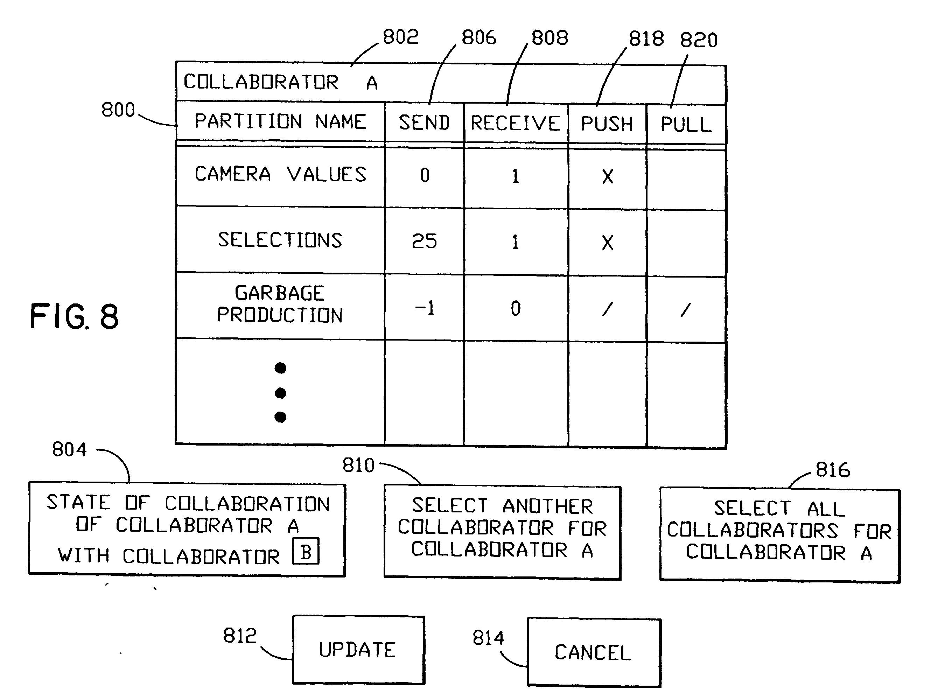

The entries of the meta-state table of FIG. 5 may be derived from user interaction with a user interface integrated into the collaborating graphics applications. An example of such a user interface for the case where the collaborating graphics applications share common state variables is shown in FIG. 8. More specifically, the user interface of FIG. 8 includes a first column 800 that identifies the partitions associated with a pair of collaborating graphics applications (which are identified by the fields 802 and 804), a second column 806 that identifies the classifications corresponding to the case where the graphics application identified in field 802 is the sending graphics application and the graphics application identified in field 804 is the receiving graphics application, a third column 808 that identifies the classifications corresponding to the case where the graphics application identified in field 804 is the sending graphics application and the graphics application identified in field 802 is the receiving graphics application. The collaborator identified in field 802 may be varied by user input. In addition, the collaborator identified in field 804 may be varied by the user by selecting field 810, and then identifying the new collaborator (not shown).

Preferably, each classification of the second and third columns 806,808 is assigned a default, which the user may change. In addition, some of the classifications may be assigned a default value that cannot be changed by user input. The send classifications of the user-interface of FIG. 8 correspond to one of the three predetermined encodings "S", "S-I", "S-D" (with priority) as discussed above. For example, as shown the "S" encoding is represented by the integer -1, the "S-I" encoding is represented by the integer 0, and the "S-D" encoding is represented by an integer between 1 and 256, wherein the integer 1 represents the highest priority and the integer 256 represents the lowest priority. In addition, the receive classifications of the user-interface of FIG. 8 correspond to one of the two predetermined encodings "P", "NP" as discussed above. For example, as shown the "P" encoding is represented by the integer 1 while the "NP" encoding is represented by the integer 0.

The user interface preferably includes an update field 812 and a cancel field 814. When the update field 812 is selected by the user, the meta-state table of FIG. 5 is updated according to the current classifications of the user-interface. However, when the cancel field 814 is selected by the user, the meta-state table of FIG. 5 is not updated. In addition, the user interface may include a field 816 that when selected by the user, the current classifications of the user interface, are copied, not just for the collaborator identified in field 804, but for all collaborators when the update field 812 is selected.

In addition, it may be necessary, for example when starting a collaboration, to initialize the state variables of each collaborating graphics application such that the state variables correspond to one another. Preferably, such initialization is accomplished by the push and pull columns 818,820 of the user interface of FIG. 8. More specifically, if the user selects the push column 818 (as indicated by the "X") of a given partition, when the update field 812 is selected by the user, the current value of the state variable(s) associated with the given partition of the graphics application identified in field 802 is sent to the collaborating graphics application identified in field 804. Upon receipt, the collaborating graphics application identified in field 804 updates the state variable(s) accordingly. However, if the user selects the pull column 820 (selection not shown) of a given partition, when the update field 812 is selected by the user, the current value of the state variable(s) associated with the given partition of the graphics application identified in field 804 is sent to the collaborating graphics application identified in field 802. Upon receipt, the collaborating graphics application identified in field 802 updates the state variable(s) accordingly. If neither the push column 818 nor the pull column 820 is selected by the user (as indicated by the "/"), the initialization of the state variables of the collaborating graphics applications as described above is not performed. Moreover, such initialization may be supplemented by user communication over a telephone link or other communication means.

To illustrate the present invention, consider the case wherein two collaborating graphics application, which are preferably copies of the same application and share the same model, have initialized the meta-state table of FIG. 5 as follows:
1) for each of the two collaborating graphics applications, the send classification corresponding to a partition associated with the selected instances and associated transformation matrices of the given application is set to "S-I";
2) for each of the two collaborating graphics applications, the receive classification corresponding to a partition associated with the selected instances and associated transformation matrices of the given application is set to "NP";
3) for each of the two collaborating graphics applications, the send classification corresponding to a partition associated with the camera position, orientation and field of view of the given application is set to "S";
4) for each of the two collaborating graphics applications, the receive classification corresponding to a partition associated with the camera position, orientation and field of view of the given application is set to "P";
5) for each of the two collaborating graphics applications, the send classification corresponding to a partition associated with the shadow settings of the given application is set to "S"; and
6) for each of the two collaborating graphics applications, the receive classification corresponding to a partition associated with the shadow settings of the given application is set to "P".

In this case, when the user of one graphics application selects and moves an object, the instance that identifies the selected object and data defining a matrix that represents the movement of the object in the world coordinate system is communicated to the other graphics application, which moves the selected object according to the received data defining the matrix. It is important to realize that in this case, the camera position of each of the two graphics applications are not shared. Thus, the movement of the object may be seen from a differing camera positions in each of the two collaborating graphics applications: Advantageously, such fine-grained granularity that results from the partitioning of the state variables provides for flexibility in controlling the level of collaboration between the two graphics applications.

### Another embodiment of the present invention is as follows:

A method for collaborating between a first application and a second application, wherein state of the first application is defined by one or more first variables, and wherein state of the second application is defined by one or more second variables, characterized in that said first variables are decomposed into one or more first partitions each having a first classification and said second variables are decomposed into one or more second partitions each having a second classification, wherein said first and second classifications represent whether said first application is to send to said second application data that reflects changes to said first and second variables of said first and second partitions associated with said first and second classifications, the method comprising the steps of: upon detecting a change to one of said first variables, identifying one of said first partitions that corresponds to said one of said first variables, identifying one of said second partitions that corresponds to said one of said first variables, and communicating data reflecting said change to one of said first variables from said first application to said second application according to one of said first classifications associated with said one of said first partitions and according to one of said second classifications associated with said one of said second partitions.

## Claims

1. A method for collaborating between a first application and a second application, wherein the state of the first application is defined by one or more first variables (SV₀), wherein the state of the second application is defined by one or more second variables (SV_{N}), and wherein said first variables are grouped into one or more partitions (P₀) each having a classification representing whether said first application is to send to said second application data that reflects changes to said first variables of said partition associated with said classification, the method comprising the steps of:
upon detecting a change to one of said first variables,
identifying (705) one of said partitions that corresponds to said one of said first variables, and
communicating (712) data reflecting said change to one of said first variables from said first application to said second application according to said classification associated with said one of said partitions;
**characterized in that** said classification associated with each of said partitions is one of a secret classification indicating that data reflecting the change to state variables of the associated partition is not to be sent to said second application (707), a send-immediate classification (711), and a send-delayed classification (713).

2. The method of claim 1, wherein said second application updates at least one of said second variables according to said communicated data.

3. The method of claim 1, wherein, when said one of said first variables corresponds directly to one of said second variables and said one of said first variables changes from a first value to a second value, said data reflecting said change to one of said first variables is one of:
said second value, and
difference between said first value and said second value.

4. The method of claim 1, further comprising the step of:
when said one of said first variables does not correspond directly to one of said second variables, transforming a change to said one of said first variables to a change to at least one of said second variables, and
wherein said data communicated from said first application to said second application represents said change to at least one of said second variables.

5. The method of claim 1, further comprising the steps of:
storing said classifications associated with each of said partitions in a table (501).

6. The method of claim 1, wherein said first and second applications are copies of a graphics application.

7. A program storage device readable by a machine, tangibly embodying a program of instructions executable by the machine to perform method steps for collaborating between a first application and a second application, wherein the state of the first application is defined by one or more first variables (SV₀), wherein the state of the second application is defined by one or more second variables (SV_{N}), and wherein said first variables are grouped into one or more partitions (P₀) each having a classification representing whether said first application is to send to said second application data that reflects changes to said first variables of said partition associated with said classification, the method steps comprising:
upon detecting a change to one of said first variables,
identifying (705) one of said partitions that corresponds to said one of said first variables, and
communicating (712) data reflecting said change to one of said first variables from said first application to said second application according to said classification associated with said one of said partitions;
**characterised in that** said classification associated with each of said partitions is one of a secret classification indicating that data reflecting the change to state variables of the associated partition is not to be sent to said second application (707), a send-immediate classification (711), and a send-delayed classification (713).

8. The program storage device of claim 7, wherein said second application updates at least one of said second variables according to said data.

9. The program storage device of claim 7, wherein said first and second applications are copies of a graphics application.

## Patentansprüche

1. Verfahren zur Zusammenarbeit zwischen einer ersten Anwendung und einer zweiten Anwendung, worin der Zustand der ersten Anwendung durch eine oder mehrere erste Variablen (SV₀) definiert wird, worin der Zustand der zweiten Anwendung durch eine oder mehrere zweite Variablen (SV_{N}) definiert wird und worin die ersten Variablen in eine oder mehrere Partitionen (P₀) eingeteilt werden, die jeweils über eine Klassifikation verfügen, die anzeigt, ob die erste Anwendung der zweiten Anwendung Daten senden soll, die Änderungen an den ersten Variablen der der Klassifikation zugehörigen Partition widerspiegeln, wobei das Verfahren folgende Schritte umfasst:
beim Feststellen einer Änderung an einer der ersten Variablen:
Identifizieren (705) einer der Partitionen, die der einen der ersten Variablen entspricht, und
Übertragen (712) der die Änderung an einer der ersten Variablen widerspiegelnden Daten von der ersten Anwendung an die zweite Anwendung gemäß der der einen der Partitionen zugehörigen Klassifikation;
**dadurch gekennzeichnet, dass** es sich bei der jeder der Partitionen zugehörigen Klassifikation entweder um eine geheime Klassifikation (707), die anzeigt, dass die die Änderung von Zustandsvariablen der zugehörigen Partition widerspiegelnden Daten nicht an die zweite Anwendung gesendet werden sollen, oder um eine sofort zu sendende Klassifikation (711) oder um eine verzögert zu sendende Klassifikation (713) handelt.

2. Verfahren nach Anspruch 1, worin die zweite Anwendung mindestens eine der zweiten Variablen gemäß den übertragenen Daten aktualisiert.

3. Verfahren nach Anspruch 1, worin, wenn die eine der ersten Variablen einer der zweiten Variablen direkt entspricht und die eine der ersten Variablen von einem ersten Wert zu einem zweiten Wert geändert wird, es sich bei den die Änderung an einer der ersten Variablen widerspiegelnden Daten um einen der folgenden Werte handelt:
den zweiten Wert und
die Differenz zwischen dem ersten Wert und dem zweiten Wert.

4. Verfahren nach Anspruch 1, das zudem folgenden Schritt umfasst:
Umwandeln einer Änderung an der einen der ersten Variablen in eine Änderung an mindestens einer der zweiten Variablen wenn die eine der ersten Variablen nicht direkt einer der zweiten Variablen entspricht, und
worin die von der ersten Anwendung an die zweite Anwendung übertragenen Daten die Änderung an mindestens einer der zweiten Variablen darstellen.

5. Verfahren nach Anspruch 1, das zudem folgende Schritte umfasst:
Speichern der den Partitionen jeweils zugehörigen Klassifikationen in einer Tabelle (501).

6. Verfahren nach Anspruch 1, worin die erste und die zweite Anwendung Kopien einer Grafikanwendung sind.

7. Maschinenlesbare Programmspeichermittel, in die ein Programm mit durch die Maschine ausführbaren Befehlen fest integriert ist, um Verfahrensschritte zur Zusammenarbeit zwischen einer ersten Anwendung und einer zweiten Anwendung durchzuführen, worin der Zustand der ersten Anwendung durch eine oder mehrere erste Variablen (SV₀) definiert wird, worin der Zustand der zweiten Anwendung durch eine oder mehrere zweite Variablen (SV_{N}) definiert wird und worin die ersten Variablen in eine oder mehrere Partitionen (P₀) eingeteilt werden, die jeweils über eine Klassifikation verfügen, die anzeigt, ob die erste Anwendung der zweiten Anwendung Daten senden soll, die Änderungen an den ersten Variablen der der Klassifikation zugehörigen Partition widerspiegeln, wobei die Verfahrensschritte Folgendes umfassen:
beim Feststellen einer Änderung an einer der ersten Variablen:
Identifizieren (705) einer der Partitionen, die der einen der ersten Variablen entspricht, und
Übertragen (712) der die Änderung an einer der ersten Variablen widerspiegelnden Daten von der ersten Anwendung an die zweite Anwendung gemäß der der einen der Partitionen zugehörigen Klassifikation;
**dadurch gekennzeichnet, dass** es sich bei der den Partitionen jeweils zugehörigen Klassifikation entweder um eine geheime Klassifikation (707), die anzeigt, dass die die Änderung von Zustandsvariablen der zugeordneten Partition widerspiegelnden Daten nicht an die zweite Anwendung gesendet werden sollen, oder um eine sofort zu sendende Klassifikation (711) oder um eine verzögert zu sendende Klassifikation (713) handelt.

8. Programmspeichermittel nach Anspruch 7, worin die zweite Anwendung mindestens eine der zweiten Variablen anhand der übertragenen Daten aktualisiert.

9. Programmspeichermittel nach Anspruch 7, worin die erste und die zweite Anwendung Kopien einer Grafikanwendung sind.

## Revendications

1. Procédé de collaboration entre un premier programme d'application et un deuxième programme d'application, où l'état du premier programme d'application est défini par une ou plusieurs premières variables (SV₀), où l'état du deuxième programme d'application est défini par une ou plusieurs deuxièmes variables (SV_{N}), et où lesdites premières variables sont regroupées en une ou plusieurs partitions (P₀) ayant chacune une classification représentant si ledit premier programme d'application doit ou non envoyer audit deuxième programme d'application des données qui reflètent des changements desdites premières variables de ladite partition associée à ladite classification, le procédé comprenant les phases qui consistent à :
en cas de détection d'une modification de l'une desdites premières variables,
identifier (705) celle desdites partitions qui correspond à ladite variable concernée parmi lesdites premières variables, et
communiquer (712) les données reflétant ladite modification de ladite variable concernée parmi lesdites premières variables, dudit premier programme d'application vers ledit deuxième programme d'application conformément à la classification associée à celle desdites partitions qui est concernée ;
**caractérisé en ce que** ladite classification associée à chacune desdites partitions est soit : une classification secrète (707) indiquant que les données qui reflètent la modification de variables d'état de la partition associée ne doivent pas être envoyées audit deuxième programme d'application, une classification en envoi immédiat (711), une classification en envoi différé (713).

2. Procédé selon la revendication 1, où ledit deuxième programme d'application met à jour au moins l'une desdites deuxièmes variables selon lesdites données communiquées.

3. Procédé selon la revendication 1, où, quand ladite variable concernée parmi lesdites premières variables correspond directement à l'une desdites deuxièmes variables et que ladite variable concernée parmi lesdites premières variables passe d'une première valeur à une deuxième valeur, lesdites données reflétant ladite modification à celle desdites premières variables concernée sont, soit :
ladite deuxième valeur, soit
la différence entre ladite première valeur et ladite deuxième valeur.

4. Procédé selon la revendication 1, comprenant en outre la phase suivante :
quand ladite variable concernée parmi lesdites premières variables ne correspond pas directement à l'une desdites deuxièmes variables, transformer une modification de celle qui est concernée parmi lesdites premières variables en une modification d'au moins une desdites deuxièmes variables, et
où lesdites données communiquées dudit premier programme d'application audit deuxième programme d'application représentent ladite modification d'au moins une desdites deuxièmes variables.

5. Procédé selon la revendication 1, comprenant en outre la phase qui consiste à :
enregistrer ladite classification qui est associée à chacune desdites partitions dans une table (501).

6. Procédé selon la revendication 1, où lesdits premier et deuxième programmes d'application sont des copies d'un programme d'application graphique.

7. Moyen de stockage d'un programme pouvant être lu par une machine, représentant tangiblement un programme d'instructions pouvant être exécutées par la machine pour réaliser les phases d'un procédé de collaboration entre un premier programme d'application et un deuxième programme d'application, où l'état du premier programme d'application est défini par une ou plusieurs premières variables (SV₀), où l'état du deuxième programme d'application est défini par une ou plusieurs deuxièmes variables (SV_{N}), et où lesdites premières variables sont groupées en une ou plusieurs partitions (P₀) ayant chacune une classification représentant si ledit premier programme d'application doit ou non envoyer audit deuxième programme d'application des données qui reflètent des changements desdites premières variables de ladite partition associée à ladite classification, les phases du procédé consistant à :
en cas de détection d'une modification de l'une desdites premières variables,
identifier (705) celle desdites partitions qui correspond à ladite variable concernée parmi lesdites premières variables, et
communiquer (712) les données reflétant ladite modification de ladite variable concernée parmi lesdites premières variables, dudit premier programme d'application vers ledit deuxième programme d'application suivant la classification associée à celle desdites partitions qui est concernée ;
**caractérisé en ce que** ladite classification associée à chacune desdites partitions est soit : une classification secrète (707) indiquant que les données qui reflètent la modification de variables d'état de la partition associée ne doivent pas être envoyées audit deuxième programme d'application ou une classification en envoi immédiat (711), une classification en envoi différé (713).

8. Moyen de stockage de programme selon la revendication 7, dans lequel ledit deuxième programme d'application met à jour au moins une desdites deuxièmes variables d'après lesdites données.

9. Moyen de stockage d'un programme selon la revendication 7, où lesdits premier et deuxième programmes d'application sont des copies d'un programme d'application graphique.
